Europäisches Patentamt

European Patent Office

Office européen des brevets

(11) Publication number : **0 594 363 A1**

# EUROPEAN PATENT APPLICATION

(21) Application number : 93308221.6

(51) Int. Cl.⁵ : **C08L 5/14, E21B 43/26**

(22) Date of filing : 15.10.93

(30) Priority : **20.10.92 US 963643**

(43) Date of publication of application :
**27.04.94 Bulletin 94/17**

(84) Designated Contracting States :
**DE DK FR GB IT NL**

(71) Applicant : **HALLIBURTON COMPANY**
**P.O. Box 1431**
**Duncan Oklahoma 73536 (US)**

(72) Inventor : **Harris, Phillip C.**
**2002 Woodrock Circle**
**Duncan, Oklahoma 73533 (US)**
Inventor : **Norman, Lewis R.**
**3408 West Elk**
**Duncan, Oklahoma 73533 (US)**
Inventor : **Hollenbeak, Keith H.**
**Rt. No. 5 - Box 447A**
**Duncan, Oklahoma 73533 (US)**

(74) Representative : **Wain, Christopher Paul et al**
**A.A. THORNTON & CO. Northumberland**
**House 303-306 High Holborn**
**London WC1V 7LE (GB)**

(54) **Borate crosslinked fracturing fluids.**

(57)    A fracturing fluid comprises seawater, a polysaccharide polymer, a borate cross-linking agent and an alkaline agent present in a quantity sufficient to maintain the pH of the fracturing fluid above 9.5. Such a fracturing fluid has enhanced temperature stability.

EP 0 594 363 A1

Jouve, 18, rue Saint-Denis, 75001 PARIS

The present invention relates to fracturing fluids for fracturing of subterranean formations.

In the drilling, completion and treatment of subterranean formations penetrated by wellbores, viscous treating fluids are commonly utilized. Typically, in the art of hydraulic fracturing, a fluid is introduced through a conduit, such as tubing or casing, disposed in the wellbore into a formation sought to be fractured. The fluid is introduced at a rate and pressure sufficient to produce a fracture or fractures in the formation and extend the produced fracture or fractures from the wellbore into the formation. Upon the creation of the fracture or fractures, additional fracturing fluid containing solid proppant materials can be introduced into the fracture or fractures in the event the initial fluid did not contain any proppant. Following this treatment, the introduced fluid is recovered from the formation but the proppant remains in the produced fracture or fractures to prevent the complete closure thereof. The propped fracture creates a conductive channel extending from the wellbore into the formation.

Fracturing fluids comprised of an aqueous liquid, a hydratable polymer and a suitable cross-linking agent for cross-linking the hydratable polymer to form a polymer gel, are known. Typical aqueous liquids include water, brine or water alcohol mixtures. Typical hydratable polymers include any of the hydratable polysaccharides which are capable of gelling in the presence of a cross-linking agent to form a gel-based fluid. A known cross-linking agent is a borate cross-linking agent, which can be any convenient source of borate ions such as an alkali metal borate, an alkaline earth metal borate, an alkali metal alkaline earth metal borate or boric acid.

In order to produce borate cross-linked fluids that are stable at the high temperatures encountered in the wells, it is necessary to increase the pH of the fluid. For example, at formation temperatures of 76.7°C (170°F) or higher, it is necessary to increase the pH of the fluid to from about 9.5 to about 12.0. Often, it is convenient and even necessary to use seawater as the aqueous liquid for the fracturing fluid. However, when attempting to raise the pH of seawater to this level, the buffering action of the seawater limits the pH to approximately 9.2.

Accordingly, there is a need for a fracturing fluid containing seawater and a polysaccharide polymer cross-linked with borate which is stable at high temperatures. There is also a need for a method of producing such a fracturing fluid.

We have now devised an improved fracturing fluid and method of making such a fracturing fluid, whereby problems in the prior art are mitigated or overcome.

According to the present invention, there is provided a fracturing fluid comprising seawater (or salt water), a polysaccharide polymer, a borate cross-linking agent and an alkaline agent to provide a pH of above 9.5.

The invention also provides a method of making a fracturing fluid, which method comprises introducing a polysaccharide polymer into seawater to produce a gel, adding an alkaline agent to the gel to obtain a pH of at least 9.5, and adding to the gel a borate cross-linking agent to cross-link with the polymer, the borate cross-linking agent comprising boric acid, borax, an alkaline earth metal borate, an alkali metal alkaline earth metal borate or a mixture of two or more thereof.

By the present invention, it is possible to obtain a fracturing fluid which has enhanced temperature stability.

In order that the invention may be more fully understood, embodiments thereof will now be described, by way of example.

It is often desirable to use seawater as the aqueous liquid in a fracturing fluid comprised of an aqueous liquid, a polysaccharide polymer and a borate cross-linking agent. Borate fluids are suitable for low temperature use in the pH range of about 7.5 to about 9.0. At formation temperatures of 76.7°C (170°F) or higher, it is necessary to increase the pH to from about 9.5 to about 12.0.

Normal concentrations of an alkaline agent, such as a 25% NaOH solution, needed to raise the pH of fresh water would be in the range of 0.5 to 2.0 vol/1,000 vol of base gel fluid. However, when attempting to raise the pH of seawater to form a borate cross-linked fluid that is stable at high temperatures, the pH is generally limited to approximately 9.2 due to the consumption of the alkaline agent by ions present in the seawater. The consumption of the alkaline agent by the seawater is believed to primarily be the result of divalent ions such as Mg and Ca which are present in the seawater. These ions slowly precipitate from the solution, thereby consuming hydroxide ions and effect the pH.

The fracturing fluid of the present invention comprises an aqueous medium, a polysaccharide polymer which is capable of being cross-linked with boron, a borate crosslinking agent and an alkaline agent present in a quantity sufficient to maintain the pH of the fracturing fluid above about 9.5.

The aqueous medium of the present invention is generally seawater. The seawater contains ions such as Cl, Na, Mg and Ca and typically has a pH of around 8.0.

In order to prepare the fracturing fluid of the present invention, a hydratable polysaccharide polymer is introduced into the salt water and mixed together to form a gel. Any suitable mixing apparatus may be used for this procedure.

The hydratable polysaccharide polymer used in the present invention may be any of the polysaccharides

familiar to those in the industry which are capable of gelling to form a gel-based fluid. Suitable polysaccharides are the galactomannan gums, glucomannan gums, guars, derived guars and cellulose derivatives. Specific gelling agents are guar gum, hydroxyethyl guar, hydroxypropyl guar, carboxymethylhydroxyethyl guar, carboxymethylhydroxypropyl guar and mixtures thereof. These polysaccharides typically have molecular weights in the range of about 200,000 to about 4,000,000.

These polysaccharides have _cis_-hydroxyl groups which can complex with cross-linking agents such as titanium, zirconium, antimony, chromium and borate. For the gel of the present invention, typical polysaccharide concentrations are from about 9.07kg polymer/3.79m3 fluid (20 lb polymer/1,000 U.S. gal fluid) to about 36.29kg polymer/3.79m$^3$ fluid (80 lb polymer/1,000 U.S. gal fluid).

After the polysaccharide polymer has been introduced into the seawater and mixed to form a gel, an alkaline agent is added to the gel to increase the fluid pH to between about 9.5 to about 12.0 in order to produce a stable borate cross-linked fluid that is stable at formation temperatures of 76.7°C (170°F) or higher. A variety of alkaline agents may be utilized to increase the fluid pH to between about 9.5 and about 12.0. Suitable alkaline agents include sodium hydroxide, potassium carbonate, sodium carbonate and potassium hydroxide.

Normal concentrations of 25% NaOH solution needed to raise the pH of fresh water are in the range of 0.5 to 2.0 vol/1,000 vol of base gel fluid. However, when attempting to raise the pH of the seawater to form a borate cross-linked fluid that is stable at high temperatures, the pH was limited to approximately 9.2 due to the buffering action of the seawater. In order to overcome the buffering action of the seawater, analytical measurements of the seawater indicated a buffer capacity equivalent to about 13 vol/1,000 vol of 25% NaOH solution, before the pH would rise about 9.2. After sufficient alkaline agent has been added to increase the pH above about 9.2, then the usual amount of 0.5 to 2.0 vol/1,000 vol of base gel fluid were predictable in controlling the pH at from about 9.5 to about 12.0 for high temperature stability.

After the alkaline agent has been added to the gel to produce a base gel having a high pH, a borate cross-linking agent is added to the gel. The concentration of cross-linking agent for efficient cross-linking was determined using viscosity as a guideline. The concentration of the cross-linking agent, is preferably in the range of from about 0.045 kg (0.1 lb) cross-linking agent, calculated as $B_2O_3$, per 4.54 kg (10 lb) polymer to about 0.91 kg (2.0 lb) cross-linking agent, calculated as $B_2O_3$, per 4.54 kg (10 lb) polymer.

This borate cross-linking agent may be any material which supplies borate ions in solution. Thus, the borate cross-linking agent can be any convenient source of borate ions. For example, the borate source may be a rapidly soluble borate source such as boric acid, borax, or Polybor, manufactured by U.S. Borax. The borate source may also be a slowly soluble borate, such as alkaline earth metal borates, alkali metal alkaline earth metal borates and mixtures thereof. Exemplary minerals which are representative of these classes of borates are as follows:

| 1. | Probertite: | $NaCaB_5O_9 \cdot 5H_2O$ |
|---|---|---|
| 2. | Ulexite: | $NaCaB_5O_9 \cdot 8H_2O$ |
| 3. | Nobleite: | $CaB_6O_{10} \cdot 4H_2O$ |
| 4. | Gowerite: | $CaB_6O_{10} \cdot 5H_2O$ |
| 5. | Frolovite: | $Ca_2B_4O_8 \cdot 7H_2O$ |
| 6. | Colemanite: | $Ca_2B_6O_{11} \cdot 5H_2O$ |
| 7. | Meyerhofferite: | $Ca_2B_6O_{11} \cdot 7H_2O$ |
| 8. | Inyoite: | $Ca_2B_6O_{11} \cdot 13H_2O$ |
| 9. | Priceite: | $Ca_4B_{10}O_{19} \cdot 7H_2O$ |
| 10. | Tertschite: | $Ca_4B_{10}O_{19} \cdot 20H_2O$ |
| 11. | Ginorite: | $Ca_2B_{14}O_{23} \cdot 8H_2O$ |
| 12. | Pinnoite: | $MgB_2O_4 \cdot 3H_2O$ |
| 13. | Paternoite: | $MgB_8O_{13} \cdot 4H_2O$ |
| 14. | Kurnakovite: | $Mg_2B_6O_{11} \cdot 15H_2O$ |
| 15. | Inderite: | $Mg_2B_6O_{11} \cdot 15H_2O$ |
| 16. | Preobrazhenskite: | $Mg_3B_{10}O_{18} \cdot 4\frac{1}{2}H_2O$ |
| 17. | Hydroboracite: | $CaMgB_6O_{11} \cdot 6H_2O$ |
| 18. | Inderborite: | $CaMgB_6O_{11} \cdot 11H_2O$ |
| 19. | Kaliborite (Heintzite): | $KMg_2B_{11}O_{19} \cdot 9H_2O$ |
| 20. | Veatchite: | $SrB_6O_{10} \cdot 2H_2O$ |

The sparingly soluble borate is preferably hydrated as indicated by the minerals set forth above.

The fracturing fluids of the present invention are sensitive to the base gel concentration, borate ion concentration and pH. These fracturing fluids require precise control of pH in order to prepare these fluids to meet specific temperature conditions. For low temperature applications, namely with pH between about 8.5 to about 9.2, a buffering solution of potassium carbonate can be used to control the pH. However, for higher temperature applications, the solution of potassium carbonate would be impractical and a 25% caustic solution of NaOH is preferably used.

Various factors affect the cross-linking rate of the fracturing fluids of the present invention. These factors include the characteristics of the polymer, the solubility rate of the borate cross-linking agent, the concentration of borate, the initial pH of the fluid, and the temperature of the fluid. Borate ions were found to have a buffering effect on pH as borate ions were formed when the borate source, such as boric acid, was neutralized by the alkaline agent.

**Claims**

1. A fracturing fluid comprising seawater; a polysaccharide polymer; a borate cross-linking agent; and an alkaline agent to provide a pH of said fracturing fluid above 9.5.

2. A fluid according to claim 1, wherein the borate cross-linking agent comprises boric acid, borax or sodium tetraborate or a mixture of two or more thereof.

3. A fluid according to claim 1 or 2, wherein the polysaccharide polymer is guar gum, hydroxyethyl guar, hydroxypropyl guar, carboxymethylhydroxyethyl guar, carboxymethylhydroxypropyl guar or a mixture of two or more thereof.

4. A fluid according to claim 1, 2 or 3 wherein the alkaline agent is a 25% sodium hydroxide solution.

5. A fluid according to claim 4, wherein the alkaline agent is present in a concentration of at least 13 volumes per 1000 volumes of fluid.

6. A method of preparing a fracturing fluid, which method comprises the steps of introducing a polysaccharide polymer into salt water to produce a gel; adding an alkaline agent to the gel in a quantity sufficient to obtain a pH of said gel above 9.5; and adding a borate crosslinking agent to the gel to cross-link with the polymer, the borate cross-linking agent comprising boric acid, borax, an alkaline earth metal borate, an alkali metal alkaline earth metal borate or a mixture of two or more thereof.

7. A method according to claim 6, wherein the polysaccharide polymer is guar gum, hydroxyethyl guar, hydroxypropyl guar, carboxymethylhydroxyethyl guar, carboxymethylhydroxypropyl guar or a mixture of two or more thereof.

8. A method according to claim 6 or 7, wherein the alkaline agent is a 25% sodium hydroxide solution.

9. A method according to claim 8, wherein the alkaline agent is added in an amount to provide at least 13 volumes per 1000 volumes of fluid.

**European Patent Office**

# EUROPEAN SEARCH REPORT

Application Number

EP 93 30 8221

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | CHEMICAL ABSTRACTS, vol. 102, no. 12, 25 March 1985, Columbus, Ohio, US; abstract no. 98127u, 'Drilling fluids gelled by borax-boric acid' * abstract * & HU-A-33 210 (MAGYAR SZENHIDROGENIPARI KUTATO-FEJLESZTO INTEZET) 29 October 1984 | 1,2,4,5 | C08L5/14 E21B43/26 |
| X | US-A-3 058 909 (L. R. KERN) * column 3, line 72 - column 4, line 6 * * column 4, line 30 - line 40 * | 1-3,6,7 | |
| A | US-A-3 146 200 (A. M. GOLDSTEIN) * column 1, line 42 - line 63 * * column 2, line 11 - line 15 * * column 3, line 46 - line 58 * * claim 1 * | 1,3,6,7 | |
| A | JOURNAL OF POLYMER SCIENCE, POLYMER PHYSICS EDITION vol. 28, no. 13 , 1990 , NEW YORK US pages 2445 - 2461 E. PEZRON ET AL. 'Rheology of galactomannan-borax gels' * page 2445, line 17 - line 18 * * page 2449, line 42 - line 44 * * page 2457, line 17 - line 26; figure 10 * | 1-5 | TECHNICAL FIELDS SEARCHED (Int.Cl.5) C08L E21B |

The present search report has been drawn up for all claims

| Place of search | Date of completion of the search | Examiner |
|---|---|---|
| THE HAGUE | 7 January 1994 | Mazet, J-F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)